# EUROPEAN PATENT APPLICATION

(11) **EP 3 086 015 A1**
(43) Date of publication of application: **26.10.2016**
(21) Application number: 14873023.7
(22) Date of filing: 28.11.2014
(51) Int. Cl.: F16L 41/03, F16L 27/08, F16L 41/08, F16L 47/02

(54) **HEADER PIPE JOINT FOR TRANSPORTING FLUID**

(30) Priority: 18.12.2013 JP 2013261472
(71) Applicant: Asahi Organic Chemicals Industry Co., Ltd., Nobeoka-shi, Miyazaki 882-8688 (JP)
(72) Inventor: NASU, Takashi, Nobeoka-shi Miyazaki 882-8688 (JP); MATSUSHITA, Hiroyuki, Nobeoka-shi Miyazaki 882-8688 (JP)
(74) Representative: Lippert, Stachow & Partner
(86) International application number: PCT/JP2014/081525
(87) International publication number: WO 2015/093257

(57) **Abstract**

[Problem] To provide, in a header pipe joint for transporting fluid, a header pipe with improved workability with respect to setting the rotational angle of a branch part and fixing the angle thereof, and with improved fastening performance.

[Solution] A header pipe joint having multiple branch parts arranged in a row, with one or more of the branch parts (9) in the side wall of a tubular main pipe part (11), and with one end of the main pipe body (11) having an insertion aperture (4) and the other end of the main pipe body (11) having a receiving aperture (3) to which an insertion aperture (4) can be connected, and the receiving aperture (3) and the insertion aperture (4) having a mechanism for adjusting the angle of the branch parts (9).

## Description

### Technical Field

The present invention relates to a piping member to which fluid transport piping is connected, and in particular, relates to a header pipe joint for transporting a fluid such as water or a drug solution and distributing it from a main pipe into branch pipes.

### Background Art

In plant facilities or equipment, a hot water supply system, or the like, a distribution header pipe is required for distributing a fluid from a main pipe to use points or the like. In general, a header pipe having a plurality of branch ports arranged side by side is manufactured by the processing such as disposing a plurality of T-shaped pipe joints side by side or forming openings in a side surface of a main pipe and adhesively bonding or fusion-bonding small-diameter pipes to the openings of the main pipe.

As a prior art, there is one that provides concaves and convexes at a receiving port and an insertion port of bonding portions as a means for determining the rotational angle of a branch port (see Patent Document 1).

### Citation List

### Patent Document

Patent Document 1: JP H9-287676 A

### Summary of the Invention

### Problems to be solved by the Invention

However, in the conventional header pipe manufacturing methods, since the plurality of joints or pipes are bonded, the number of labor hours is large and there is concern about fluid leakage due to adhesion failure of bonded portions. As a result, much labor is required for inspection, repair, and so on. Further, according to these methods, there has been a problem that, for example, the angle of the branch port is difficult to match, resulting in being unable to connect the piping at the time of the execution of work.

Further, when the concaves and convexes are provided at the receiving port and the insertion port of the bonding portions as the means for determining the rotational angle of the branch port as in Patent Document 1, there has been a problem that not only it is difficult to surely apply an adhesive to the concave-convex surfaces, but also, since the adhesion area increases, the adhesion failure increases to cause leakage.

The present invention has been made in view of the prior art problems described above and has an object to provide a fluid transport header pipe joint with improved workability for setting a rotational angle of a branch portion and fixing the angle and with improved adhesiveness. Means for solving the Problems

A first feature is that a header pipe joint having a plurality of branch portions includes at least one branch portion provided on a side wall of a tubular main pipe portion; an insertion port provided on one end side of the main pipe portion; a receiving port which is provided on the other end side of the main pipe portion and to which an insertion port can be joined; and an angle adjustment mechanism for the branch portion, the angle adjustment mechanism being provided at the receiving port and the insertion port, wherein the angle adjustment mechanism includes at least one cutout portion and at least one projecting portion.

A second feature is that the angle adjustment mechanism includes the at least one cutout portion provided at an end of the receiving port; and the at least one projecting portion provided on the main pipe portion side of the insertion port.

A third feature is that the angle adjustment mechanism includes the at least one cutout portion provided on the main pipe portion side of the insertion port; and the at least one projecting portion provided at an end of the receiving port.

A fourth feature is that the projecting portion has a generally triangular shape decreasing in size toward an end of the insertion port to be joined or has an arc-shaped front end, and a fifth feature is that the cutout portion has the same shape as that of the projecting portion or a generally square shape and can be fitted to the projecting portion.

A sixth feature is that the projecting portion has a generally triangular shape decreasing in size toward an end of the insertion port to be joined or has an arc-shaped front end, and that the cutout portion has the same shape as that of the projecting portion or a generally square shape and can be fitted to the projecting portion.

A seventh feature is that the receiving port includes a receiving port pipe portion; a receiving port guide portion having an inner diameter that is greater in a diameter direction than that of the receiving port pipe portion; and the cutout portion provided at the receiving port guide portion, and that the insertion port includes an insertion port pipe portion that is inserted into the receiving port pipe portion; an insertion port guide portion having an outer diameter that is greater in a diameter direction than that of the insertion port pipe portion; and the projecting portion provided at an outer surface of the insertion port guide portion.

An eighth feature is that the receiving port has the projecting portion provided at an end of the receiving port, and that the insertion port includes an insertion port pipe portion; a stopper portion having an outer diameter that is greater in a diameter direction than that of the insertion port pipe portion; and the cutout portion provided at the stopper portion.

A ninth feature is that an angle adjustment mechanism is provided at the branch portion.

### Advantageous Effect of the Invention

The present invention has the structures described above and can obtain the following excellent effects. The shapes of an insertion port and a receiving port to be joined together are not complicated and a branch portion is provided integrally, and therefore, the number of times of bonding and bonding portions can be reduced so that it is possible to reduce the number of labor hours, to reduce the risk leading to a possibility of the occurrence of leakage, and to improve the adhesiveness.

The rotational angle of a branch port can be easily set by an angle adjustment mechanism and, further, the number of cutout portions can be arbitrarily set in advance according to a desired rotational angle.

Since a projecting portion has a shape decreasing in size (becoming acute or tapering) toward an insertion port end to be joined, even when the angle is offset to some extent when joining header pipes to each other, the angle of a branch port can be finely adjusted to a desired angle at the completion of bonding.

### Brief Description of the Drawings

FIG. 1 is a perspective view showing a header pipe joint according to a first embodiment of the present invention.
FIG. 2 is a perspective view, as seen in a direction different from FIG. 1, showing the header pipe joint according to the first embodiment of the present invention.
FIG. 3 is a perspective view for explaining an angle adjustment mechanism of the header pipe joints according to the first embodiment of the present invention.
FIG. 4 is a sectional view showing one example of a joined state of the header pipe joints according to the first embodiment of the present invention.
FIG. 5 shows a state of a swivel angle 0° of branch portions of the header pipe joints according to the first embodiment of the present invention, wherein (a) is a front view and (b) is a right side view.
FIG. 6 shows a state of a swivel angle 90° of branch portions of the header pipe joints according to the first embodiment of the present invention, wherein (a) is a front view and (b) is a right side view.
FIG. 7 is a plan view for explaining a swivel angle setting adjustment mechanism for branch portions of the header pipe joints according to the first embodiment of the present invention.
FIG. 8 is a perspective view for explaining an angle adjustment mechanism of header pipe joints according to a second embodiment of the present invention.
FIG. 9 is a front view showing a header pipe joint according to a third embodiment of the present invention. Mode for carrying out the Invention

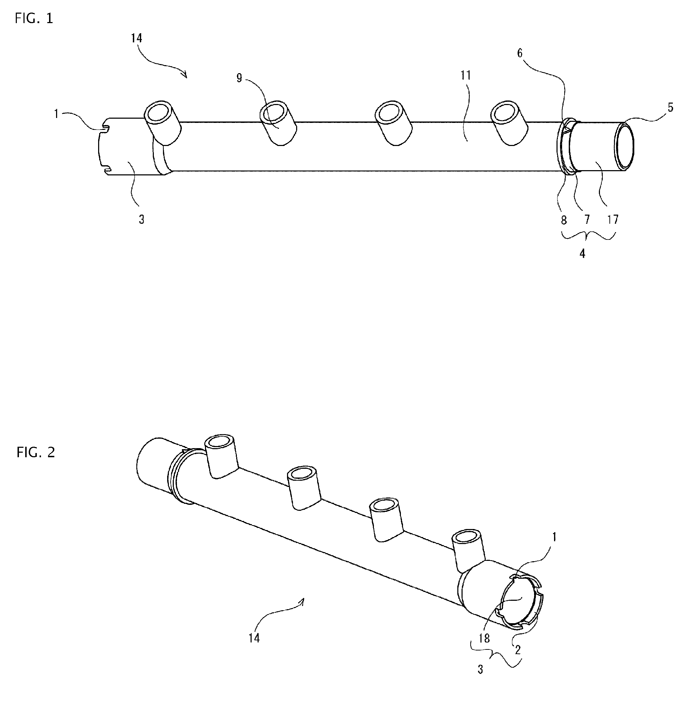

Hereinbelow, a first embodiment of the present invention will be described with reference to the drawings. FIGS. 1, 2, and 3 show one implementation mode of a header pipe joint 14 according to the present invention. The header pipe joint 14 is made of a rigid polyvinyl chloride resin and manufactured by injection molding. The header pipe joint 14 has, on a side wall of a circular straight tubular main pipe portion 11, at least one branch portion 9 being perpendicular to a flow path axis of the header pipe joint 14 and having a circular tubular receiving or insertion port, a circular tubular insertion port 4 provided integrally on one end side of the main pipe portion 11, a circular tubular receiving port 3 which is provided integrally on the other end side of the main pipe portion 11 and to which an insertion port 4 can be adhesively bonded, and an angle adjustment mechanism 16 for the branch portions 9 at the receiving port 3 and the insertion port 4.

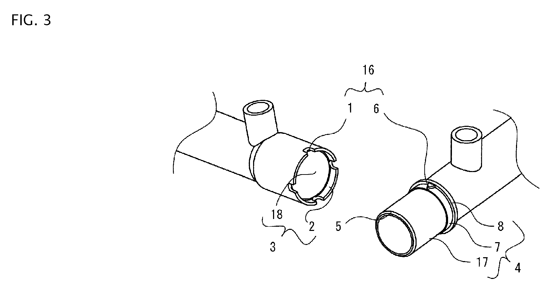

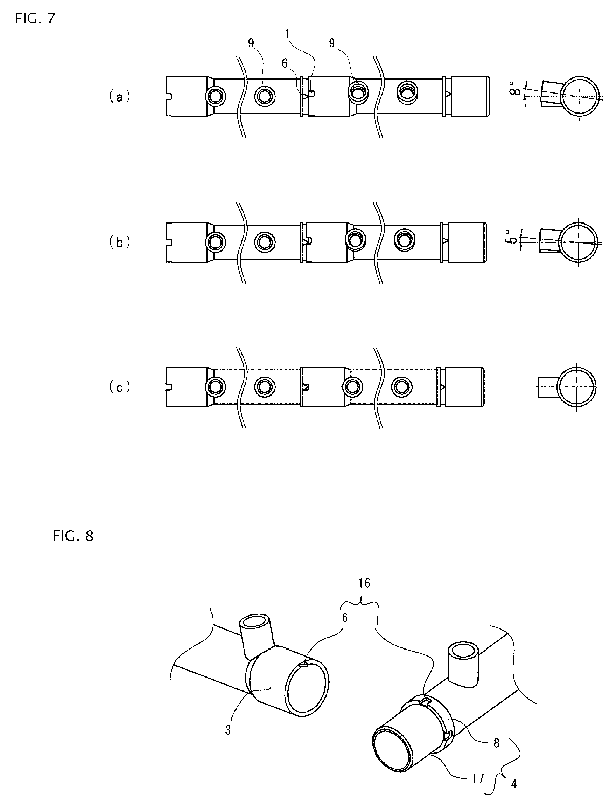

As shown in FIG. 3, the angle adjustment mechanism 16 is provided with four cutout portions 1 at an end of the receiving port 3 and with one projecting portion 6 on the main pipe portion 11 side of the insertion port 4. The projecting portion 6 is located in the same direction as the branch portion 9 with respect to the flow path axis. Correspondingly thereto, the first of the cutout portions 1 is located in the same direction as the branch portion 9 with respect to the flow path axis, and on the basis thereof, the other three cutout portions 1 are provided, each at 90° in a plane perpendicular to the flow path axis. In the first embodiment, the cutout portions 1 are provided at the end of the receiving port 3 and the projecting portion 6 is provided on the main pipe portion 11 side of the insertion port 4, while in a second embodiment, as shown in FIG. 8, a projecting portion 6 is provided at an end of a receiving port 3 and cutout portions 1 are provided on the main pipe portion 11 side of an insertion port 4.

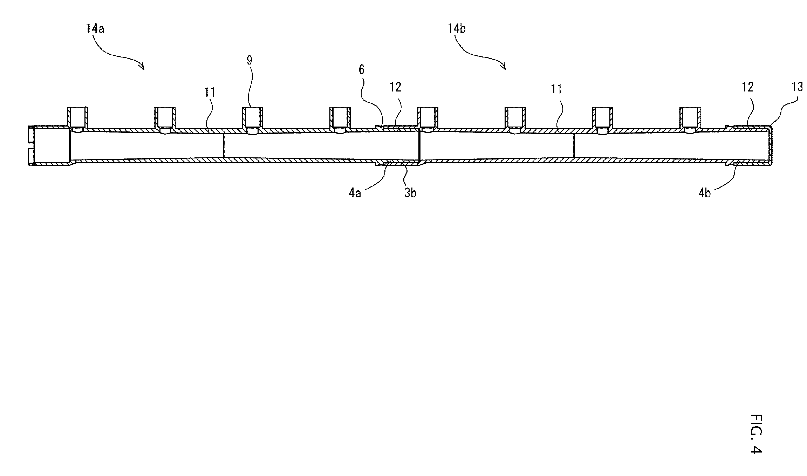

FIG. 4 shows one example of a joined state of the header pipe joints 14 according to the present invention. A receiving port 3b of a header pipe joint 14b and an insertion port 4a of a header pipe joint 14a are adhesively bonded together (bonded portions 12) and a general-purpose cover 13 having a receiving opening is adhesively bonded to an insertion port 4b of the header pipe joint 14b. By increasing the number of bonding header pipe joints 14, it is also possible to provide more branch portions 9. A bonding method of the bonded portions 12 may be, apart from adhesive bonding using a solvent-based adhesive, fusion bonding using a heat fusion machine, electrofusion, or the like. A rubber ring or an 0-ring may be attached to the receiving port 3. In this case, a detachment prevention mechanism is required.

As shown in FIGS. 1 and 3, the receiving port 3 and the insertion port 4 are provided at both ends of the header pipe joint 14. The receiving port 3 and the insertion port 4 are sized to have the same nominal diameter and can be bonded to each other. The insertion length of the insertion port 4 is set to a length that can be inserted into the receiving port 3. The insertion port 4 has an end face provided with a chamfered portion 5 and thus has a shape that does not require chamfering at the time of adhesive bonding. The branch portion 9 may have either a receiving port shape or an insertion port shape and has a sufficient insertion length. The sizes of the receiving port 3 and the insertion port 4 can be determined according to the JIS standard or other domestic or overseas standards.

When carrying out the adhesive bonding as in FIG. 4, for example, an adhesive is uniformly applied to an inner peripheral surface of the receiving port 3b of the header pipe joint 14b and to an outer peripheral surface of the insertion port 4a of the header pipe joint 14a and then the insertion port 4a is inserted into the receiving port 3b or the receiving port 3b is inserted over the insertion port 4a so that both are bonded together. The adhesive bonding method is a TS bonding method which is a generally widely adopted adhesive bonding method. While the general-purpose cover 13 is adhesively bonded to a distal end portion of the header pipe joint 14b, this is only one example of the implementation. A general-purpose pipe joint according to the JIS standard may be bonded thereto or an elbow, a reducer, a bend, a bent pipe, a flange, or the like may be bonded thereto.

As shown in FIG. 3, the receiving port 3 includes a receiving port pipe portion 18 into which a later-described insertion port pipe portion 17 is inserted, a receiving port guide portion 2 having an inner diameter that is greater in a diameter direction than that of the receiving port pipe portion 18, and the plurality of generally square cutout portions 1 provided at regular intervals along the outer periphery of the receiving port guide portion 2. The insertion port 4 includes the insertion port pipe portion 17 that is inserted into the receiving port pipe portion 18, an insertion port guide portion 7 having an outer diameter that is greater in a diameter direction than that of the insertion port pipe portion 17, the generally triangular projecting portion 6 provided on the outer periphery of the insertion port guide portion 7, and a stopper portion 8 having an outer diameter that is greater in a diameter direction than that of the insertion port guide portion 7. When the insertion port 4 is inserted into the receiving port 3 or the receiving port 3 is inserted over the insertion port 4, the insertion port guide portion 7 and the receiving port guide portion 2 are fitted to each other and the cutout portion 1 and the generally triangular projecting portion 6 decreasing in size toward the cutout portion 1 are fitted to each other. While the shape of the projecting portion 6 is set to be generally triangular, the projecting portion 6 may have any shape as long as it decreases in size toward the cutout portion 1 to which the projecting portion 6 is fitted, and may be, for example, arc-shaped or trapezoidal. The cutout portion 1 may have any shape as long as it is a shape to which the projecting portion 6 can be fitted, and may have a shape different from that of the projecting portion 6 as shown in FIGS. 1, 2, and 3 or the same shape as that of the projecting portion 6. In the case of the different shapes, the widest portion of the projecting portion 6 and the widest portion of the cutout portion 1 are set to have substantially the same width as each other.

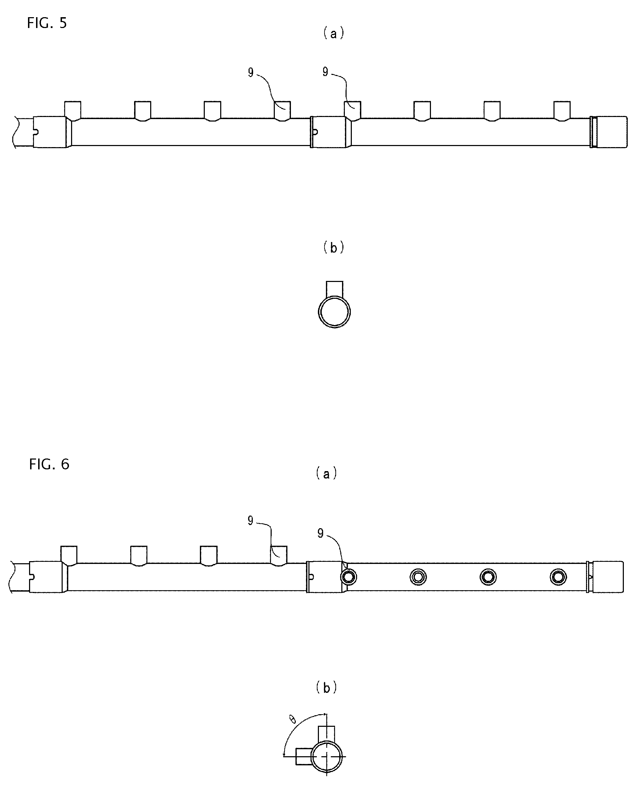

The angular interval in a rotational direction of the branch portion 9 can be arbitrarily set by the number n of the cutout portions 1 provided along the outer periphery of the receiving port guide portion 2. In the case of FIGS. 5 and 6, there is shown an example in which the rotational angle of the branch portion 9 can be set to the number 4 in the rotational direction per 90°, i.e. 0°, 90°, 180°, and 270°. FIG. 5 shows a state in which the execution of work is carried out with the branch portions 9 arranged at the same angle (swivel angle 0°), while FIG. 6 shows a state in which the execution of work is carried out with the branch portions 9 offset at a right angle (swivel angle 90°). In the present invention, a swivel angle θ of the branch portions 9 can be set to a minimum of 22.5° so that the number in the rotational direction can be set to a maximum of 16, and therefore, the swivel angle can be adjusted to a desired one of 16-level angles. The receiving port guide portion 2 and the insertion port guide portion 7 have shapes that can be fitted to each other, and the insertion port guide portion 7 has a guide length of 10 mm. If the guide length is not more than 10 mm, the sizes of the projecting portion 6 and the cutout portion 1 become small so that the angle adjusting width is narrowed, while if the guide length is not less than 15 mm, the width of the cutout portion becomes large so that the number in the rotational direction decreases, and therefore, the guide length is preferably 10 mm to 15 mm. By providing the receiving port guide portion 2 with a concave step and providing the insertion port guide portion 7 with a convex step, it is also possible to bond general-purpose pipe joints according to JISK6742 and JISK6743 thereto.

When adhesively bonding the header pipe joints 14 to each other, an end face of the stopper portion 8 provided at an end (on the main pipe portion 11 side) of the insertion port guide portion 7, having the outer diameter that is greater in the diameter direction than that of the insertion port guide portion 7, and formed to a size substantially equal to that of the receiving port is inserted until it is brought into contact with an end face of the receiving port guide portion 2, so that it is possible to ensure a sufficient adhesive margin.

As shown in FIG. 7(a) to (b), at the time of bonding, the insertion port is inserted into the receiving port so that an outer surface of the projecting portion 6 provided on the outer periphery of the insertion port guide portion 7 is brought into contact with a corner of the cutout portion 1 provided at an outer peripheral portion of the receiving port guide portion 2, and therefore, the angle between the branch portions 9 of the two header pipe joints 14 can be adjusted to a desired angle even when an offset of ±8° at the maximum occurs in the rotational direction.

The number of the projecting portions 6 should be at least one or more. The number of the cutout portions 1 should also be at least one or more. The number of the projecting portions 6 and the number of the cutout portions 1 do not need to be equal to each other as a condition for carrying out the present invention and, if the numbers are the same or if the number of the cutout portions 1 is greater than the number of the projecting portions 6, it is possible to function the angle adjustment mechanism 16.

Next, a second embodiment of the present invention will be described with reference to FIG. 8. The same reference numerals will be used for elements having the same structures as those in the first embodiment. As shown in FIG. 8, a projecting portion 6 is provided at an end of a receiving port 3, while cutout portions 1 are provided at a stopper portion 8, thereby constituting an angle adjustment mechanism 16. The stopper portion 8 is formed to a size greater than an outer diameter of an insertion port pipe portion 17 and equal to an outer diameter of the receiving port 3. Therefore, differently from the first embodiment, the insertion port guide portion 7 is not required. By inserting the insertion port pipe portion 17 into the receiving port 3 and fitting the projecting portion 6 to the cutout portion 1, mutual header pipe joints 14 can be bonded together. Since the same method as in the first embodiment is used as a bonding method, a description thereof is omitted.

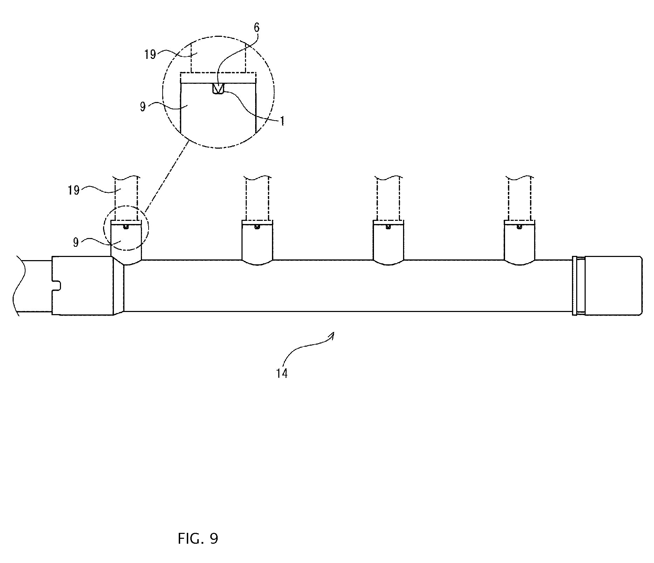

Next, a third embodiment of the present invention will be described with reference to FIG. 9. In the third embodiment of the present invention, as shown in FIG. 9, a generally square cutout portion 1 is provided at a branch portion 9 of a header pipe joint 14, while a generally triangular projecting portion 6 is provided at a branch pipe 19, and both are fitted and bonded together. In this way, if the branch portion 9 is formed to have the same shape as the receiving port 3 or the same shape as the insertion port 4, it is possible to bond the branch pipe 19 thereto. Accordingly, if the branch pipe further has a sub-branch pipe, the angle of the sub-branch pipe of the branch pipe can also be adjusted to a desired angle.

While the header pipe joint 14 is made of a rigid polyvinyl chloride resin, it can also be manufactured by injection molding of an impact-resistant polyvinyl chloride resin or a heat-resistant polyvinyl chloride resin. The size of the main pipe, the size and number of the branch portions, and the setting of the rotational angle of the branch portions can be arbitrarily set. Further, the material of the header pipe joint 14 may be, apart from a thermoplastic resin such as a polyolefin resin including a polypropylene resin, ABS, or a polyvinylidene chloride resin, a thermosetting resin or a reaction injection molding material using a norbornene-based monomer and a metathesis catalyst system as an undiluted reaction solution. It can be manufactured using injection molding, compression molding, reaction injection molding, or the like according to the material. Therefore, the productivity is improved compared to manufacturing a header pipe by processing pipes or joints. Further, a header pipe alone is manufactured as a header pipe that is molded integrally by injection molding and has no bonded portion, and therefore, it is possible to provide a header pipe with high water tightness.

### Description of Reference Numerals

- 1: cutout portion
- 2: receiving port guide portion
- 3: receiving port
- 4: insertion port
- 5: chamfered portion
- 6: projecting portion
- 7: insertion port guide portion
- 8: stopper portion
- 9: branch portion
- 11: main pipe portion
- 12: adhesively bonded portion
- 13: general-purpose cover
- 14: header pipe joint
- 16: angle adjustment mechanism
- 17: insertion port pipe portion
- 18: receiving port pipe portion

## Claims

1. A header pipe joint for fluid transportation having a plurality of branch portions, the header pipe joint **characterized by** comprising: at least one branch portion provided on a side wall of a tubular main pipe portion; an insertion port provided on one end side of the main pipe portion; a receiving port which is provided on the other end side of the main pipe portion and to which an insertion port can be joined; and an angle adjustment mechanism for the branch portion, the angle adjustment mechanism being provided at the receiving port and the insertion port, wherein the angle adjustment mechanism comprises at least one cutout portion and at least one projecting portion.

2. The header pipe joint for fluid transportation according to claim 1, **characterized in that** the angle adjustment mechanism comprises: the at least one cutout portion provided at an end of the receiving port; and the at least one projecting portion provided on the main pipe portion side of the insertion port.

3. The header pipe joint for fluid transportation according to claim 1, **characterized in that** the angle adjustment mechanism comprises: the at least one cutout portion provided on the main pipe portion side of the insertion port; and the at least one projecting portion provided at an end of the receiving port.

4. The header pipe joint for fluid transportation according to claim 2 or 3, **characterized in that** the projecting portion has a generally triangular shape decreasing in size toward an end of the insertion port to be joined, or has an arc-shaped front end.

5. The header pipe joint for fluid transportation according to claim 2 or 3, **characterized in that** the cutout portion has the same shape as that of the projecting portion or a generally square shape and can be fitted to the projecting portion.

6. The header pipe joint for fluid transportation according to claim 2 or 3, **characterized in that** the projecting portion has a generally triangular shape decreasing in size toward an end of the insertion port to be joined or has an arc-shaped front end, and the cutout portion has the same shape as that of the projecting portion or a generally square shape and can be fitted to the projecting portion.

7. The header pipe joint for fluid transportation according to any one of claims 1, 2, and 4 to 6, **characterized in that** the receiving port comprises: a receiving port pipe portion; a receiving port guide portion having an inner diameter that is greater in a diameter direction than that of the receiving port pipe portion; and the cutout portion provided at the receiving port guide portion, and the insertion port comprises: an insertion port pipe portion that is inserted into the receiving port pipe portion; an insertion port guide portion having an outer diameter that is greater in a diameter direction than that of the insertion port pipe portion; and the projecting portion provided at an outer surface of the insertion port guide portion.

8. The header pipe joint for fluid transportation according to any one of claims 1 and 3 to 6, **characterized in that** the receiving port has the projecting portion provided at an end of the receiving port, and the insertion port comprises: an insertion port pipe portion; a stopper portion having an outer diameter that is greater in a diameter direction than that of the insertion port pipe portion; and the cutout portion provided at the stopper portion.

9. The header pipe joint for fluid transportation according to any one of claims 1 to 8, **characterized in that** an angle adjustment mechanism is provided at the branch portion.
